(19) Europäisches Patentamt / European Patent Office / Office européen des brevets

(11) **EP 3 854 894 B1**

(12) **EUROPEAN PATENT SPECIFICATION**

(45) Date of publication and mention
of the grant of the patent:
**14.02.2024 Bulletin 2024/07**

(21) Application number: **19862577.4**

(22) Date of filing: **12.09.2019**

(51) International Patent Classification (IPC):
*C22B 1/243* (2006.01)  *C22B 5/10* (2006.01)
*C22B 23/02* (2006.01)  *C22C 1/02* (2006.01)
*C22C 33/04* (2006.01)

(52) Cooperative Patent Classification (CPC):
**C22C 1/023; C22B 1/243; C22B 5/10;
C22B 23/023; C22C 33/04;** Y02P 10/134;
Y02P 10/20

(86) International application number:
**PCT/JP2019/035891**

(87) International publication number:
**WO 2020/059630 (26.03.2020 Gazette 2020/13)**

(54) **METHOD FOR SMELTING OXIDE ORE**

VERFAHREN ZUM SCHMELZEN VON OXIDERZ

PROCÉDÉ DE FUSION DE MINERAI D'OXYDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2018 JP 2018176524**

(43) Date of publication of application:
**28.07.2021 Bulletin 2021/30**

(73) Proprietor: **Sumitomo Metal Mining Co., Ltd.
Tokyo 105-8716 (JP)**

(72) Inventor: **ISEKI, Takashi
Niihama-shi, Ehime 792-0002 (JP)**

(74) Representative: **Jones, Nicholas Andrew
Withers & Rogers LLP
2 London Bridge
London SE1 9RA (GB)**

(56) References cited:
EP-A1- 0 222 452      WO-A1-97/20954
WO-A1-2015/015468   FR-A1- 2 619 825
JP-A- S6 462 438       JP-A- H10 102 118
JP-A- S50 136 203      JP-A- 2010 270 954
JP-A- 2017 036 472     JP-B2- 4 149 531
US-A- 3 953 196

**Description**

TECHNICAL FIELD

The present invention relates to an oxide ore dry-smelting method, and more particularly, to a smelting method for producing a ferronickel metal, which is a reduction product, by using a nickel oxide ore as a raw material and reducing the oxide ore with a carbonaceous reducing agent.

BACKGROUND ART

As a method for smelting nickel oxide ore which is one kind of oxide ore and called limonite or saprolite, a dry smelting method in which nickel mat is produced by using a smelting furnace, a dry smelting method in which ferronickel, which is an alloy of iron and nickel, is produced by using a rotary kiln or a movable hearth furnace, a hydrometallurgical method in which a mixed sulfide in which nickel and cobalt are mixed is produced by acid leaching at a high temperature and a high pressure using an autoclave, and the like are known.

A treatment for forming nickel oxide ore of a raw material into a lump product by crushing the nickel oxide ore into a proper size and the like is performed as a pretreatment in order to advance the reaction particularly in a case in which nickel oxide ore is reduced and smelted by a dry smelting method among the various methods described above.

Specifically, when nickel oxide ore is formed into a lump product, that is, a lump is formed from a powdery or granular ore, it is general that the nickel oxide ore is mixed with other components, for example, a binder, a reducing agent such as coke to prepare a mixture and the mixture is further subjected to moisture adjustment and the like, then charged into a lump product manufacturing machine, and formed into a lump product (indicating a pellet, a briquette, or the like; hereinafter, simply referred to as the "pellet") having, for example, one side or a diameter of about 10 mm to 30 mm.

The pellet obtained as a lump product is required to exhibit gas permeability to a certain extent in order to "emit" the moisture contained. Furthermore, the composition of the reduction product to be obtained is ununiform and a trouble that the metal is dispersed or unevenly distributed is caused when the reduction does not uniformly proceed in the pellet in the subsequent reduction treatment. For this reason, it is important to uniformly mix the mixture when fabricating pellets or to maintain the temperature as constant as possible when reducing the obtained pellets.

In addition, it is also a significantly important technique to coarsen the metal (ferronickel) to be generated by the reduction treatment. It is difficult to separate the ferronickel from the slag to be generated at the same time, and the recovery rate (yield) as ferronickel greatly decreases in a case in which the ferronickel generated has a fine size of, for example, several tens of micrometers to several hundreds of micrometers or less. For this reason, a treatment for coarsening ferronickel after being reduced is required.

For example, Patent Document 1 discloses a technique intended to further enhance the productivity of granular metal when producing a granular metal by heating an agglomerated product containing a metal oxide and a carbonaceous reducing agent and thus reducing and melting the metal oxide contained in the agglomerated product. Specifically, a method for producing a granular metal is disclosed in which an agglomerated product containing a metal oxide and a carbonaceous reducing agent is supplied onto a hearth of a moving bed type reduction melting furnace and heated to reduce and melt the metal oxide, and the obtained granular metal is cooled, then discharged to the outside of the furnace, and recovered, and the method is characterized in that, in the heating, an agglomerated product having an average diameter of 19.5 mm or more and 32 mm or less is supplied onto the hearth when performing heating by setting the base density of the agglomerated product on the hearth to 0.5 or more and 0.8 or less where the base density denotes the relative value of the projected area ratio of the agglomerated product spread on the hearth onto the hearth with respect to the largest projected area ratio of the agglomerated product onto the hearth when the distance between the agglomerated products spread on the hearth is taken as 0 as well as the furnace temperature in the first half region in which the iron oxide in the agglomerated product is solid-reduced of the furnace is set to 1300 to 1450°C and the furnace temperature in the second half region in which the reduced iron in the agglomerated product is carburized, melted and aggregated of the furnace is set to 1400 to 1550°C.

In addition, Patent Document 1 also discloses that the productivity of granular metal iron can be improved by concurrently controlling the base density and the average diameter of the agglomerated product.

However, the technique described in Patent Document 1 is merely a technique concerning the reactions which take place outside the agglomerated product, and it is needless to say that the most important factor in the reduction reaction is the internal state of the agglomerated product in which the reduction reaction takes place. That is, it is considered that, by controlling the reduction reaction inside the agglomerated product, reaction efficiency and uniform reduction reaction can be realized, and as a result, a high quality metal can be produced.

Furthermore, as in the technique disclosed in Patent Document 1, when the diameter of the agglomerated product is limited to a regulated range, a decrease in yield at the time of production of the agglomerated product cannot be avoided, and as a result, there is a concern of an increase in cost. Incidentally, the agglomerated product is also difficult to laminate unless otherwise close-packed when the base density of the agglomerated product is in a range of 0.5 to 0.8, and thus the treatment becomes an inefficient treatment.

As described above, upon production of a metal containing nickel and iron by mixing and reducing nickel oxide ore, despite an increase in productivity, a decrease in cost, and an increase in quality being important factors, there have been a number of problems.

Patent Document 2 - describes a process for reducing metallic oxides. Patent Document 3 describes the production of iron. Patent Document 4 describes the production of a ferronickel. Patent Documents 5 and 6 describe nickel oxide ore smelting processes. Patent Document 7 describes a process for producing ferronickel, nickel irons and stainless steels. Patent Document 8 describes a process for the reduction of metal oxides. Patent Document 9 describes a method for operating a rotary kiln.

Patent Document 1: Japanese Unexamined Patent Application, Publication No. 2011-256414
Patent Document 2: European Patent No. 0222452
Patent Document 3: Japanese Patent No. 4149531
Patent Document 4: International Application Publication no. WO 2015/015468
Patent Document 5: Japanese Patent Application No. 2017 036472
Patent Document 6: French Patent No. 2619825
Patent Document 7: International Application Publication No. WO 97/20954
Patent Document 8: US Patent Application No. 3953196
Patent Document 9: Japanese Patent Application No. 2010 270954

DISCLOSURE OF THE INVENTION

Problems to be Solved by the Invention

The present invention has been proposed in view of such circumstances, and an objective thereof is to provide an oxide ore smelting method capable of efficiently producing a high quality metal.

Means for Solving the Problems

The inventors of the present invention have conducted intensive investigations, and as a result, have found out that the above-mentioned problems can be solved by using a reducing furnace having a burner and heating a mixture containing an oxide ore and a carbonaceous reducing agent by the burner to brought into a molten state and then reducing the mixture, whereby the present invention has been completed.

The invention is described in the appended claims.

Effects of the Invention

According to the present invention, it is possible to provide an oxide ore smelting method capable of efficiently producing a high quality metal.

BRIEF DESCRIPTION OF THE DRAWINGS

Fig. 1 is a flow chart illustrating an example of the flow of a method for smelting nickel oxide ore.
Fig. 2 is a schematic diagram illustrating an example of the configuration of a reducing furnace and is a diagram for describing an aspect of a reduction treatment in the reducing furnace.
Fig. 3 is a flow chart illustrating another example of the flow of the method for smelting nickel oxide ore.
Fig. 4 is a schematic diagram illustrating another configuration example of the reducing furnace.

PREFERRED MODE FOR CARRYING OUT THE INVENTION

Hereinafter, the present invention will be described in detail; however, the present invention is not limited to the following embodiments, and various modifications can be made without changing the scope of the present invention, which is defined in the appended claims. In addition, in the present specification, the notation "X to Y" (X and Y are arbitrary numerical values) means "X or more and Y or less".

<<1. Overview of present invention>>

The present invention is an oxide ore smelting method for producing ferronickel metal, which is a reduction product, by using an oxide ore containing nickel oxide ore as a raw material, mixing the oxide ore with a carbonaceous reducing agent to obtain a mixture, and reducing the mixture. In the case of using nickel oxide ore as a raw material ore, ferronickel metal, which is an alloy of iron and nickel, is produced as a reduction product.

Specifically, the oxide ore smelting method according to the present invention is characterized by including a reducing step for reducing an oxide ore by charging the mixture of the oxide ore and the carbonaceous reducing agent into a reducing furnace having a burner (burner furnace) and heating the mixture by the burner to obtain a metal and slag in a molten state.

According to such a method, a metal can be produced while increasing productivity in a treatment for a shorter time than that in a conventional case and further suppressing the cost. Moreover, by increasing a metallized rate, a high quality metal having a desired high component content can be effectively produced.

In addition, in the dry treatment using the burner, a metal and slag generated in a molten state are separated by a difference in specific gravity (separated by specific gravity) in the reducing furnace. According to this, only a metal can be efficiently recovered in a short time and at low cost.

<<2. Method for smelting nickel oxide ore>>

Hereinafter, as a specific embodiment of the present invention (hereinafter referred to as the "present embodiment"), a smelting method will be described, as an example, in which nickel oxide ore is used as a raw material ore, nickel (nickel oxide) and iron (iron oxide) contained in the nickel oxide ore is reduced to generate a metal of an iron-nickel alloy (ferronickel) and the metal is further separated to produce ferronickel.

<2-1. First embodiment>

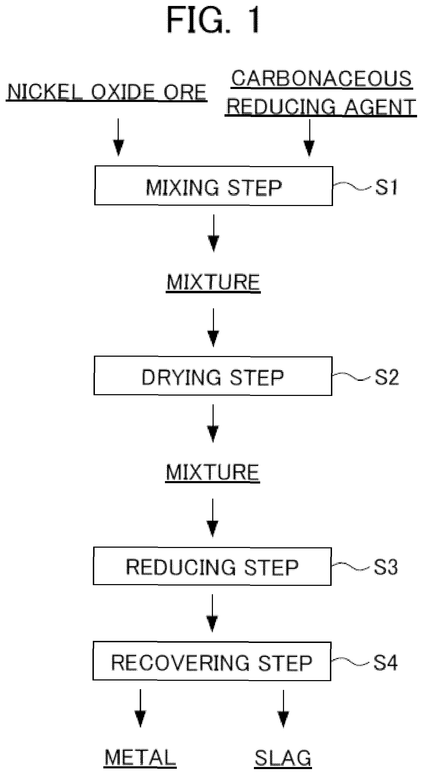

Fig. 1 is a flow chart illustrating the flow of a method for smelting nickel oxide ore. As illustrated in Fig. 1, the method for smelting nickel oxide ore according to the present embodiment (first embodiment) has a mixing step S1 for mixing raw materials including nickel oxide ore, a drying step S2 for drying the obtained mixture, a reducing step S3 for reducing the mixture after being dried by heating the mixture at a predetermined reducing temperature, and a recovering step S4 for separating the metal and the slag which are reduction products thus obtained and recovering the metal.

[Mixing step]

The mixing step S1 is a step for mixing raw material powders including nickel oxide ore to obtain a mixture. Specifically, in the mixing step S1, nickel oxide ore, which is a raw material ore, and a carbonaceous reducing agent are mixed, and powders of iron ore, a flux component, a binder, and the like having a particle diameter of, for example, about 0.1 mm to 0.8 mm as additives of arbitrary components are mixed, thereby obtaining a mixture.

Upon mixing, the mixing can be performed by adding a predetermined amount of water. By adding and mixing water, the mixing property of the raw material powders can be improved. Incidentally, the mixing treatment can be performed by using a known mixing machine or the like.

In the mixing step S1, kneading may be performed at the same time as mixing of the respective raw material powders in order to enhance the mixing property. By performing the kneading, a shear force is applied to the mixture obtained by mixing the raw material powders, and thus the aggregation of the raw material ore, the carbonaceous reducing agent, and the like can be untangled, the mixing can be more uniformly performed, voids between respective particles can be decreased, and uniform reaction can be caused to occur when the mixture is subject to the reduction treatment. Incidentally, the kneading can be performed by using a twin-screw kneader or the like.

Herein, the nickel oxide ore which is a raw material ore is not particularly limited, but limonite ore, saprolite ore, and the like can be used. Incidentally, the nickel oxide ore contains nickel oxide (NiO) and iron oxide ($Fe_2O_3$) as a structural component.

When using nickel oxide ore, classification, pulverization, and the like into a predetermined size may be performed. By performing classification, pulverization, and the like, the particle diameters can be aligned in a certain degree of range, ores having a large size are removed by pulverization and the like to enhance the mixing property of the carbonaceous reducing agent or the like, and uniformity at the time of the reduction treatment can be improved.

The carbonaceous reducing agent is not particularly limited, but examples thereof include a coal powder and a coke powder. Incidentally, it is preferable that the carbonaceous reducing agent has a size equivalent to the particle size of the aforementioned nickel oxide ore which is a raw material ore. According to this, the mixing property of the nickel oxide ore can be enhanced and uniformity at the time of the reduction treatment can be improved.

The amount of the carbonaceous reducing agent mixed is set to preferably a proportion of 80% by mass or less and more preferably 60% by mass or less when the amount of the carbonaceous reducing agent required for reducing nickel oxide and iron oxide constituting the nickel oxide ore without excess or deficiency is taken as 100% by mass. When the amount of the carbonaceous reducing agent mixed is set to a proportion of 80% by mass or less with respect to 100% by mass of the total value of chemical equivalents, the reduction reaction can be efficiently advanced. In addition, the lower limit value of the amount of the carbonaceous reducing agent mixed is not particularly limited, but is set to preferably a proportion of 15% by mass or more and more preferably a proportion of 20% by mass or more with respect to 100% by mass of the total value of chemical equivalents.

Incidentally, the amount of the carbonaceous reducing agent required for reducing nickel oxide and iron oxide without excess or deficiency can be rephrased as the total amount of a chemical equivalent required for reducing the entire amount of nickel oxide into nickel metal and a chemical equivalent required for reducing iron oxide into iron metal (hereinafter, also referred to as the "total value of chemical equivalents").

The iron ore, which is an additive of an arbitrary component, is not particularly limited, but, for example, iron ore having an iron grade of about 50% by mass or more, hematite to be obtained by hydrometallurgy of nickel oxide ore, and the like can be used.

Examples of the binder may include bentonite, a polysaccharide, a resin, water glass, and dehydrated cake. In addition, examples of the flux component may include calcium oxide, calcium hydroxide, calcium carbonate, and silicon dioxide.

An example of the composition (% by weight) of some of raw material powders to be mixed in the mixing step S1 is presented in the following Table 1. Incidentally, the composition of the raw material powders is not limited thereto.

[Table 1]

| Raw material powder [% by weight] | Ni | $Fe_2O_3$ | C |
|---|---|---|---|
| Nickel oxide ore | 1~2 | 50~60 | - |
| Carbonaceous reducing agent | - | - | ≈85 |
| Iron ore | - | 80~95 | - |

[Drying step]

The drying step S2 is a step for drying the obtained mixture. In the present embodiment, the mixture obtained through the aforementioned mixing step S1 is charged into a reducing furnace, which will be described below, without any changes and subjected to the reduction treatment (reducing step S3), but the mixture is dried prior to the reduction treatment. Incidentally, in a case in which the treatment is performed in the drying step S2 in this way, the mixture after being dried is charged into the reducing furnace and then subjected to the treatment in the reducing step S3.

When the mixture is dried prior to the reduction treatment in this way, the reduction treatment can be uniformly performed with respect to this mixture, and the mixture can be reliably heated to a temperature equal to or more than the melting temperature and can be reduced.

The drying temperature is set in a range of 150°C or more and 400°C or less. When the drying treatment is performed in such a range, the mixture can be efficiently dried while suppressing the progress of the reaction of the mixture in this treatment. In addition, in a case in which the mixture is molded in a predetermined shape and then subjected to the reduction treatment, by drying the mixture in the above-described temperature range, it is possible to prevent the molded product from being rapidly heated and ruptured by the reduction treatment.

The mixture is dried by using a gas generated in the reducing furnace.

An exhaust gas generated in a reducing furnace in which heat reduction is performed is used to dry the mixture. The exhaust gas generated through the reduction treatment is extremely high temperature, and thus is suitable for drying a mixture containing nickel oxide ore. In addition, since the exhaust gas is high temperature, the drying treatment in which a gas flow rate is suppressed can be performed, and accordingly, a dust generation rate in the drying treatment can be suppressed. In the case of using the exhaust gas from the reducing furnace, it is preferable that piping is configured to connect the reducing furnace and the drying facility, and the exhaust gas generated from the reducing furnace is transferred directly to the drying facility.

An example of the composition (parts by weight) of solid components in the mixture after being subjected to the drying treatment is presented in the following Table 2. Incidentally, the composition of the mixture is not limited thereto.

[Table 2]

| Composition of solid component in mixture after being dried [Parts by weight] | Ni | Fe$_2$O$_3$ | SiO$_2$ | CaO | Al$_2$O$_3$ | MgO | Binder | Others |
|---|---|---|---|---|---|---|---|---|
| | 0.5~1.5 | 50~60 | 8~15 | 4~8 | 1~6 | 2~7 | About 1 | Remainder |

Incidentally, the drying treatment may be performed at the same time as mixing in the aforementioned mixing step S1, and in the case of also performing drying in the mixing step S1 in this way, the case of using, as a raw material, an ore which does not need to be dried, and the like, the drying step S2 can also be omitted. In addition, for example, in the case of using an ore having strong adherability as a raw material, mixing may be performed after drying, and steps may be appropriately selected depending on properties of the ore, the carbonaceous reducing agent, and the like.

[Reducing step]

The reducing step S3 is a step for charging the mixture into a reducing furnace and reducing the mixture to thereby generate a metal and slag. Specifically, in the method for smelting nickel oxide ore according to the present embodiment, a reducing furnace having a burner (hereinafter, also referred to as the "burner furnace") and the mixture is heated by the burner to thereby reduce an oxide ore. In a heat reduction treatment by this burner, the mixture is melted in accordance to the progress of the reduction reaction, and thereby a metal and slag in a molten state are generated.

Herein, in the reduction treatment using the burner furnace in the reducing step S3, since the reduction reaction of nickel oxide ore is gradually advanced in accordance with heating of the mixture charged into the furnace by the burner, the reduction reaction occurs also in a solid state before the mixture is brought into a molten state. In the burner furnace, in accordance with the progress of the reduction reaction with respect to nickel oxide ore, the state of the mixture is gradually changed by burner heating from a solid state to a liquid state, that is, a molten state, and finally, a metal and slag in a molten state, which are generated by the heat reduction treatment by the burner, are obtained.

In a method in which the reduction treatment is performed by using a conventional kiln or the like, the mixture can be brought into only a semi-molten state, and in this state, it takes a long period of time for metal grains to grow, and thus there is a problem of an increase in cost. In addition, if the semi-molten product adheres to the inside of the kiln and this product grows, the operation has to be stopped for maintenance, and there is a problem in that the operation efficiency is significantly decreased.

In this regard, by heating the mixture containing an oxide ore by the burner of the burner furnace and reducing the mixture, reduction can be effectively performed at a short treatment time. Then, nickel can be reduced at a ratio of approximately 100% by controlling the atmosphere in the furnace in which the operation can be sufficiently performed, and the reduction ratio of iron can be controlled. According to this, high quality ferronickel can be produced at low cost and at high productivity. Incidentally, the proportion of the reduction of the ore can be controlled by the mixing ratio of the carbonaceous reducing agent in the mixture.

In addition, since reduction can be performed by the treatment in a short time, a variation in composition due to oxidation of the generated metal and the like hardly occurs.

Furthermore, by performing heat reduction by using the burner, the mixture is brought into a molten state in accordance with the progress of the reduction reaction, a metal and slag in a molten state are finally generated, and the metal and the slag in a molten state can be easily separated by a difference in specific gravity. In addition, when the metal in a molten state (molten metal) is brought into a state being deposited below the slag by the difference in specific gravity, even if a variation in oxygen partial pressure or CO partial pressure occurs in the atmosphere in the furnace, the influence on the composition of the metal accumulating below the slag at the bottom of the furnace can be suppressed.

Furthermore, in heating using the burner, the treatment can be performed at significantly lower cost as compared to heating using electricity or the like, and thus economic efficiency can also be enhanced. Specifically, in the burner furnace, as the fuel, for example, LPG gas, LNG gas, coal, coke, pulverized coal, and the like are used, the cost of these fuels is very inexpensive, and facility cost or maintenance cost can also be suppressed to significantly low as compared to an electric furnace and the like.

In addition, in the burner furnace, maintenance is very easy, a continuous operation can also be effectively performed, and the operation efficiency can be enhanced as compared to a kiln or the like. For example, in the case of an operation using a kiln, an ore is brought into a semi-molten state and adheres to the inside of the furnace and the ore hardly grows, it is necessary to stop the operation at a frequency of about once in two weeks and perform a deposit removal operation or the like. On the other hand, in the burner furnace, since the charged ore can be reduced by the treatment in a short time and the entire amount thereof can be discharged as a metal and slag, adhering of the ore to the inside of the furnace can also be suppressed. Therefore, basically, there is no need for maintenance such as deposit removal, and for example, a continuous operation like an electric furnace of Elkem method becomes possible. In addition, as compared to the electric furnace of Elkem method, the structure is simple and the number of accompanying facilities is small, and thus operation cost, periodic maintenance cost, and the like can be reduced.

Furthermore, in on-site smelting in which the reduction treatment is generally performed near a mine, since it is sufficient to transport only the produced metal content to the market, the cost can be considerably reduced as compared to the case of transporting and smelting a raw material ore, and there is an advantage in securing of a disposal site for slag, or the like; however, in this case, it is necessary to construct a power plant in the case of performing heating using electricity or the like, and thus this is enormously expensive and the cost for electric power generation is generally very high. On the other hand, according to the reduction treatment using the burner which uses a gas as a heat source, electric power generation facilities can be simplified, and thus the reduction treatment using the burner is more suitable for on-site smelting.

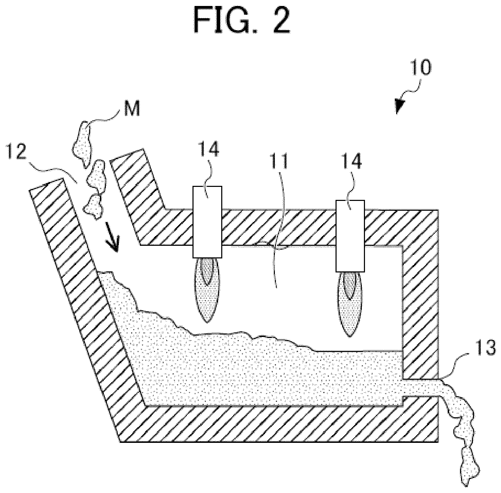

Fig. 2 is a diagram (cross-sectional view) schematically illustrating a configuration example of a reducing furnace having a burner. As illustrated in Fig. 2, a reducing furnace 10 includes a treatment unit 11 which heats a mixture M to perform a reduction treatment, a charging port 12 used for charging the mixture M into the treatment unit 11, and a discharging port 13 used for discharging a metal obtained by the reduction treatment. Incidentally, an inner wall or a hearth of the treatment unit 11 is preferably protected by slag coating. According to this, damages of the furnace can be prevented, a continuous operation can be performed over a long period of time, and thus facility cost or maintenance cost can be reduced.

In the treatment unit 11 of the reducing furnace 10, for example, a burner 14 is provided at the upper part thereof. In the treatment unit 11, the mixture M charged from the charging port 12 is heated by the burner 14, and the reduction reaction of reducing nickel oxide ore by the carbonaceous reducing agent contained in the mixture M is caused to occur. Herein, in the treatment unit 11, by heating using the burner 14, the reduction reaction is caused to occur and the mixture is brought into a molten state in accordance with the progress of the reduction reaction. That is, the reducing furnace 10 is a melt-reducing furnace. In the inside of the treatment unit 11, a metal and slag in a molten state are generated by such a reduction reaction, and reduction products in which the slag and the metal are separated into the upper layer and the lower layer, respectively, by a difference in specific gravity are obtained.

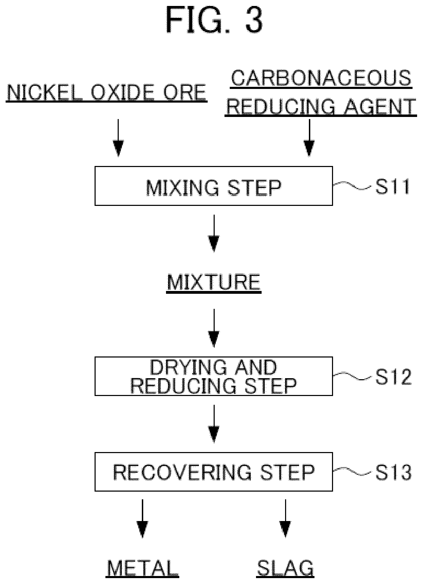

The metal in a molten state separated by a difference in specific gravity is discharged from the discharging port 13. The discharging port 13 is provided at a position where the metal constituting the lower layer in the reduction product (metal layer) exists, and the metal separated by a difference in specific gravity can be selectively discharged and recovered. In addition, although description is omitted in Fig. 3, a slag discharging port can be provided at the upper side of the discharging port 13, and the slag separated by a difference in specific gravity and constituting the upper layer can also be selectively discharged.

The fuel of the burner is not particularly limited, and may be a solid, a liquid, or a gas. Specifically, for example, a solid fuel such as coke, coal, or pulverized coal, a liquid fuel such as A-heavy oil or C-heavy oil, or a gas fuel such as LNG or LPG can be used. Of these, particularly, a burner using a gas fuel (gas burner) is preferred because the combustion is relatively stable, the temperature is easily controlled, and a high temperature can be realized.

In addition, in heating using the burner, the air-fuel ratio of the burner is preferably controlled in a predetermined range. Specifically, the mixture is heated by controlling the air-fuel ratio of the burner preferably in a range of 0.8 or more and 1.1 or less and more preferably in a range of 0.85 or more and 0.95 or less. Incidentally, the air-fuel ratio refers to a mass ratio of air to fuel.

In the reduction treatment in the reducing step S3, since heating is performed by using the burner, the reduction reaction can be advanced in a short time, and the mixture can be melted in a short time. Further, the metal and the slag in a molten state thus generated can be separated by a difference in specific gravity in a short time. From these points of view, the oxidation of the metal generated by the reduction reaction is relatively hardly advanced. However, by controlling the air-fuel ratio of the burner in a predetermined range, the oxygen concentration in the atmosphere in the furnace is decreased so that the oxidation of the metal can be further suppressed, and thereby high quality ferronickel can be stably produced. From this point of view, by performing heating while controlling the air-fuel ratio of the burner preferably to 0.8 or more and 1.1 or less, high quality ferronickel can be stably produced.

Herein, in the reduction treatment using the burner, heating is performed such that the temperature of a metal to be obtained is in a range of 1400°C or more and 1600°C or less and the temperature of slag is in a range of 1480°C or more and 1680°C or less. By performing heating such that the temperatures of the metal and the slag are in such ranges, the reduction reaction can be effectively advanced, and a high quality metal having a high nickel content can be produced.

Incidentally, control of temperatures of a metal and slag to be obtained can be performed by controlling a heating temperature by increasing or decreasing a fuel heating value in the burner, or the like.

[Recovering step]

The recovering step S4 is a step for separating the metal and the slag obtained by reduction to recover a metal.

As described above, in the reduction treatment in the reducing step S3, since the mixture is brought into a molten state and reduced by using the burner, a molten metal and molten slag are generated. Since the metal has a larger specific gravity and is heavier than the slag, the metal and the slag each are naturally separated by a difference in specific gravity, and the metal accumulates at the furnace bottom of the reducing furnace. Therefore, the metal is taken out from the vicinity of furnace bottom of the reducing furnace and then recovered, and thereby only the metal can be selectively recovered. On the other hand, since the slag floats on the metal, for example, the slag can be taken out from the furnace wall and recovered. In this way, since the metal and the slag thus obtained are in a molten state, the metal and the slag can be easily separated by a difference in specific gravity thereof and recovered.

Alternatively, the metal and the slag may be recovered from one hole of the reducing furnace in a state of being mixed. By doing in this way, the structure of the reducing furnace can be simplified, and workability can also be improved. In a case in which the metal and the slag are taken out from one hole in a state of being mixed, the recovered metal and slag are cooled, solidified, and then separated by magnetic separation or the like, and thereby the metal can be recovered. Incidentally, since the metal and the slag have already been separated when being in a molten state, basically, even in a solid state, the state of the metal and the slag being separated is maintained, and thus the metal can be easily recovered even by a method such as magnetic separation.

By simply separating the metal and the slag in this way, the metal can be recovered at a high recovery rate.

<2-2. Second embodiment>

Fig. 3 is a flow chart illustrating the flow of a method for smelting nickel oxide ore according to a second embodiment. As illustrated in Fig. 3, in the smelting method according to the second embodiment, unlike the smelting method according to the first embodiment, the drying step and the reducing step are combined and then executed.

Specifically, the method for smelting nickel oxide ore according to the second embodiment has a mixing step S11 for mixing raw materials including nickel oxide ore, a drying and reducing step S12 for charging the obtained mixture into a reducing furnace and performing a drying treatment and a reduction treatment, and a recovering step S13 for separating the metal and the slag which are reduction products thus obtained and recovering the metal.

Incidentally, since the mixing step S11 and the recovering step S13 correspond to the mixing step S1 and the recovering step S4, respectively, in the smelting method according to the first embodiment and the same treatments are performed, the detailed description herein will be omitted. In addition, also regarding the treatment in the drying and reducing step S12, the description of the treatments which are in common with those of the drying step S2 and the reducing step S3 in the smelting method according to the first embodiment will be omitted, and only the different content will be described in detail.

[Drying and reducing step]

The drying and reducing step S12 is a step for charging the mixture, which contains at least nickel oxide ore and a carbonaceous reducing agent, obtained through the mixing step S11 into a reducing furnace, performing a drying treatment with respect to the mixture in the reducing furnace, and reducing the mixture after being dried with a continuous operation by heating the mixture by the burner.

More specifically, in the drying and reducing step S12, a reducing furnace to which a drying facility is directly connected is used, and the drying treatment and the reduction treatment are performed in this reducing furnace. In this case, in the drying facility connected to the reducing furnace (the drying facility in the reducing furnace), a gas (exhaust gas) generated by performing the reduction treatment is introduced directly into the drying facility from the reducing furnace, and the drying treatment is performed by using this gas.

In this way, the reducing furnace to which the drying facility is directly connected is used, and the drying treatment and the reduction treatment are performed in the reducing furnace, and thereby the gas generated by the reduction treatment can be effectively used as a gas for drying the mixture, that is, a drying gas. According to this, there is no need for securing a separate heat source used for the drying treatment and thus the operation can be efficiently performed.

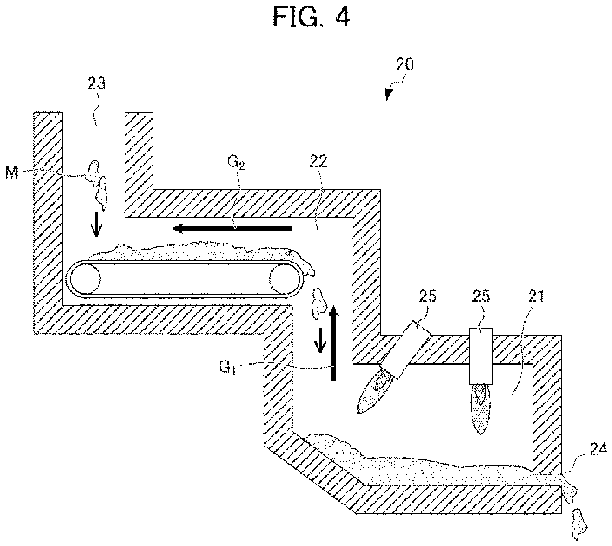

Fig. 4 is a diagram schematically illustrating a configuration example of a reducing furnace having a burner and a diagram (cross-sectional view) illustrating the configuration of the reducing furnace to which a drying facility is directly connected. As illustrated in Fig. 4, a reducing furnace 20 includes a reduction treatment unit 21 in which a reduction treatment is performed by heating a mixture M and a drying treatment unit 22 in which the mixture M is subjected to a drying treatment prior to the reduction treatment in the reduction treatment unit 21. The reduction treatment unit 21 and the drying treatment unit 22 are directly connected to each other to constitute the reducing furnace 20. In addition, the reducing furnace 20 includes a charging port 23 used for charging the mixture M and a discharging port 24 used for discharging the metal obtained by the reduction treatment. Incidentally, an inner wall of the reducing furnace 20, particularly, an inner wall or a hearth of the reduction treatment unit 21 is preferably protected by slag coating.

In the reducing furnace 20, the mixture M charged from the charging port 23 is supplied to the drying treatment unit 22. The drying treatment unit 22 is configured, for example, by a belt conveyor device as illustrated in Fig. 4. In the drying treatment unit 22, the supplied mixture M is placed on the belt of the belt conveyor device and the drying treatment is performed in the process of the mixture moving on the belt at a predetermined speed.

In the reduction treatment unit 21, for example, a burner 25 is provided at the upper part thereof. In the reduction treatment unit 21, the mixture (mixture after being dried) M transferred through the drying treatment in the drying treatment unit 22 is supplied, this mixture M is heated by the burner 25 to be brought into a molten state, and the reduction reaction is caused to occur by a carbonaceous reducing agent contained in the mixture M. That is, the reducing furnace 20 is a melt-reducing furnace. In the inside of the reduction treatment unit 21, a metal and slag are generated by such a reduction reaction, and reduction products in which the slag and the metal are separated into the upper layer and the lower layer, respectively, by a difference in specific gravity are obtained.

Herein, in the reducing furnace 20, as described above, the reduction treatment unit 21 and the drying treatment unit 22 are configured to be directly connected to each other. More specifically, as illustrated in Fig. 4, in a positional relationship in a height direction, the drying treatment unit 22 and the reduction treatment unit 21 are positioned at an upper side and a lower side, respectively, and are provided in the same space. Further, the reduction treatment unit 21 and the drying treatment unit 22 are connected in a state of communicating with each other. Therefore, in such a reducing furnace 20, a gas (exhaust gas) generated by the reduction treatment in the reduction treatment unit 21 is introduced by the upward-flowing stream thereof directly into the drying treatment unit 22 positioned at the upper side in the height direction in relation to the reduction treatment unit 21, as indicated by arrow $G_1$ in Fig. 4.

In the drying treatment unit 22 in the reducing furnace 20 having such a configuration, a gas introduced directly from the reduction treatment unit 21 is used as a drying gas and the drying treatment is performed (arrow $G_2$ in Fig. 4). The gas generated by the reduction treatment in the reduction treatment unit 21 is an exhaust gas generated by the treatment at a high reducing temperature, and thus this gas is in a high-temperature state. Therefore, this gas can be suitably used as a drying gas. In addition, when this high-temperature gas is used as a drying gas, there is no need for performing heating or the like again, and the cost can be effectively reduced.

Moreover, the gas obtained through the reduction treatment is a reducing gas. Therefore, in the drying treatment unit 22, by performing the drying treatment using such a high-temperature gas having reducing property as a drying gas, the oxidation of the mixture can be effectively prevented. According to this, when the mixture M after being dried is subjected to the reduction treatment, uniform reduction reaction can be caused to occur without excess or deficiency, and a high quality metal can be produced.

EXAMPLES

Hereinafter, the present invention will be described in more detail by means of Examples; however, the present invention is not limited to the following Examples at all.

«Example 1, Comparative Example 1»

(Mixing step)

A mixture was obtained by mixing nickel oxide ore as a raw material ore, iron ore, quartz and limestone which were flux components, a binder, and a carbonaceous reducing agent (coal powder, carbon content: 82% by mass, average particle diameter: about 65 pm) by using a mixing machine while adding an appropriate amount of water. Incidentally, the carbonaceous reducing agent was contained in an amount to be a proportion of 27% by mass when the amount required for reducing nickel oxide (NiO) and iron oxide ($Fe_2O_3$) contained in the nickel oxide ore without excess or deficiency was taken as 100% by mass.

(Drying step and reducing step)

In Example 1, the obtained mixture was charged directly into a drying facility without being molded and was subjected to the drying treatment at a temperature of 180°C or more for 1 hour, and the mixture after being dried was charged into a reducing furnace having a burner (burner furnace). A gas burner using a gas fuel was used as the burner. In the burner furnace, the charged mixture was heated by the burner to be brought into a molten state and then was subjected to the reduction treatment. By this reduction treatment, a metal and slag in a molten state were generated in the burner furnace, and the slag and the metal were separated into the upper layer and the lower layer, respectively, by a difference in specific gravity. Incidentally, in the reduction treatment, the operation was divided into Examples 1-1 to 1-5, and the mixture was heated and reduced such that temperatures of the metal and the slag to be obtained were set to temperatures presented in the following Table 3 as the reducing temperature in each operation.

On the other hand, in Comparative Example 1, the obtained mixture was granulated by a pan type granulator and sieved to a size of φ 14.0 ± 0.5 mm. Thereafter, the drying treatment at 180°C or more for 1 hour was performed in the drying facility. Thereafter, the dried samples were divided into four (Comparative Examples 1-1 to 1-4) and subjected to the reduction treatment by using a rotary hearth furnace. Incidentally, in the reduction treatment, reduction was performed such that the reducing temperature was set to a furnace temperature presented in the following Table 3.

In Example 1 and Comparative Example 1, the time required for the reduction treatment (reducing time) was measured. Incidentally, the reducing time refers to an average time from the mixture containing nickel oxide ore being charged into the reducing furnace to the metal and the slag in a molten state thus generated being discharged from the reducing furnace.

(Recovering step)

In Example 1, the molten metal was taken out from the vicinity of the furnace bottom of the burner furnace and recovered. On the other hand, in Comparative Example 1, the reduction product obtained after the reduction treatment was pulverized and then subjected to magnetic separation to recover a metal.

(Analysis of obtained metal)

Regarding each metal sample obtained as described above, the metallized rate of nickel, the nickel content in the metal (nickel grade), and the recovery rate of metal were analyzed respectively. The analysis results are presented in the following Table 3. In addition, the reducing time is also presented together in Table 3.

Herein, the nickel content in the metal was measured by using an ICP emission spectroscopic analyzer (SHIMAZU S-8100), the metallized rate of nickel was calculated by the following Equation (1), and the nickel content rate in the metal was calculated by the following Equation (2).

$$\text{Metallized rate of nickel = amount of metallized Ni in pellet}$$
$$\div \text{ (amount of entire nickel in pellet)} \times 100 \text{ (\%)} \cdots \text{Equation}$$
$$(1)$$

$$\text{Nickel content rate in metal = amount of metallized Ni in}$$
$$\text{pellet} \div \text{ (total amount of metallized nickel and iron in}$$
$$\text{pellet)} \times 100 \text{ (\%)} \cdots \text{Equation (2)}$$

In addition, regarding the recovered metal, the recovery rate of nickel metal was calculated by the following Equation (3) from the nickel content rate in the nickel oxide ore subjected to the reduction treatment and the charged amount thereof and the amount of the recovered nickel.

$$\text{Recovery rate of nickel metal = amount of recovered nickel} \div$$
$$\text{(amount of charged ore} \times \text{nickel content ratio in ore)} \times 100$$
$$\cdots \text{Equation (3)}$$

[Table 3]

| | Reducing furnace | Reducing temperature | | | Reducing time (minute) | Metallized rate of nickel (%) | Nickel content rate in metal (%) | Recovery rate of metal (%) |
|---|---|---|---|---|---|---|---|---|
| | | Metal temperature (°C) | Slag temperature (°C) | Furnace temperature (°C) | | | | |
| Example 1-1 | Burner furnace | 1420 | 1500 | - | 20 | 98.5 | 18.0 | 98.1 |
| Example 1-2 | Burner furnace | 1470 | 1550 | - | 14 | 98.7 | 18.2 | 98.3 |
| Example 1-3 | Burner furnace | 1500 | 1580 | - | 12 | 98.9 | 18.5 | 98.5 |
| Example 1-4 | Burner furnace | 1550 | 1630 | - | 9 | 99.1 | 18.3 | 98.7 |
| Example 1-5 | Burner furnace | 1590 | 1660 | - | 6 | 98.8 | 16.3 | 96.6 |
| Comparative Example 1-1 | Rotary hearth furnace | - | - | 1300 | 50 | 96.7 | 17.7 | 93.3 |
| Comparative Example 1-2 | Rotary hearth furnace | - | - | 1350 | 45 | 96.8 | 17.9 | 93.7 |
| Comparative Example 1-3 | Rotary hearth furnace | - | - | 1400 | 40 | 96.6 | 17.5 | 93.6 |
| Comparative Example 1-4 | Rotary hearth furnace | - | - | 1450 | 30 | 96.4 | 17.6 | 93.3 |

As shown in the results of Table 3, in Examples 1-1 to 1-5 which were subjected to the reduction treatment using the burner furnace, favorable results were obtained in all of the metallized rate of nickel, the nickel content rate in the metal, and the recovery rate of metal. Moreover, in the methods of Examples 1-1 to 1-5, the reducing time could be set to an extremely short time and thus the operation could be efficiently performed.

On the other hand, in Comparative Examples 1-1 to 1-4 which were subjected to the reduction treatment according to a conventional method by using a rotary hearth furnace, lower values than those in Examples were obtained in all of the metallized rate of nickel, the nickel content rate in the metal, and the recovery rate of metal. In addition, the reducing time was longer in the methods of Comparative Examples 1-1 to 1-4 than in Examples.

«Example 2»

In Example 2, the drying treatment and the reduction treatment were performed by using a reducing furnace (burner furnace) to which a drying facility was directly connected as exemplified in Fig. 4. Specifically, after the mixture was charged into the reducing furnace, the mixture was dried by using, as a drying gas, a gas generated by the reduction treatment in the drying facility (the drying treatment unit 22 in Fig. 4). Thereafter, the mixture after being dried was heated by the burner in a main body (the reduction treatment unit 21 in Fig. 4) of the reducing furnace so as to be melted. Incidentally, operations were performed in the same manner as in Example 1 except for the above-described matters.

After the reduction treatment, the molten metal was taken out from the vicinity of the furnace bottom of the burner furnace and recovered, and the metallized rate of nickel, the nickel content in the metal (nickel grade), and the recovery rate of metal were analyzed respectively for the obtained metal samples. The analysis results are presented in the following Table 4. The specific values for the recovered Ni, charged ore and Ni content ratio in the ore were not recorded in the examples.

[Table 4]

| | Drying facility | Reducing furnace | Reducing temperature | | Reducing time (minute) | Metallized rate of nickel (%) | Nickel content rate in metal (%) | Recovery rate of metal (%) |
|---|---|---|---|---|---|---|---|---|
| | | | Metal temperature (°C) | Slag temperature (°C) | | | | |
| Example 2-1 | Directly connected to burner furnace | Burner furnace | 1435 | 1500 | 18 | 97.7 | 18.0 | 97.1 |
| Example 2-2 | Directly connected to burner furnace | Burner furnace | 1455 | 1550 | 13 | 98.2 | 18.2 | 98.3 |
| Example 2-3 | Directly connected to burner furnace | Burner furnace | 1500 | 1580 | 11 | 98.5 | 18.3 | 98.4 |
| Example 2-4 | Directly connected to burner furnace | Burner furnace | 1550 | 1630 | a | 98.6 | 18.5 | 98.2 |
| Example 2-5 | Directly connected to burner furnace | Burner furnace | 1600 | 1660 | 6 | 98.2 | 18.4 | 98.6 |

13

As shown in the results of Table 4, also in Examples 2-1 to 2-5, favorable results were obtained in all of the metallized rate of nickel, the nickel content rate in the metal, and the recovery rate of metal. In addition, the reducing time could be set to an extremely short time and thus the operation could be efficiently performed.

EXPLANATION OF REFERENCE NUMERALS

10, 20 REDUCING FURNACE
11 TREATMENT UNIT
21 REDUCTION TREATMENT UNIT
22 DRYING TREATMENT UNIT
12, 23 CHARGING PORT
13, 24 DISCHARGING PORT
14, 25 BURNER

**Claims**

1. An oxide ore dry-smelting method for producing a ferronickel metal, which is a reduction product, by reducing a mixture of a nickel oxide ore and a carbonaceous reducing agent, the oxide ore smelting method comprising:

   a drying step for drying the mixture, and
   a reducing step for reducing the nickel oxide ore by charging the mixture into a reducing furnace and heating the mixture by a burner to obtain a ferronickel metal and slag in a molten state,
   wherein in the drying step, the mixture is dried at a temperature of 150 °C or more and 400 °C or less, by using gas generated in the reducing furnace, the dried mixture thereafter being subjected to a treatment in the reducing step, and
   wherein in the reducing step, the mixture comprising the nickel oxide ore is heated such that the temperature of a ferronickel metal to be obtained is in a range of 1400 °C or more and 1600 °C or less and the temperature of slag is in a range of 1480 °C or more and 1680 °C or less, whereby the mixture is reduced.

2. The oxide ore smelting method according to claim 1, wherein in the reducing step, the metal and the slag in a molten state generated by reducing the nickel oxide ore are separated by specific gravity.

3. The oxide ore smelting method according to claim 1 or claim 2, wherein in the reducing step, the mixture is heated by controlling an air-fuel ratio of the burner in a range of 0.8 or more and 1.1 or less.

4. The oxide ore smelting method according to any one of claims 1 to 3, wherein in the drying step, the mixture is dried in a drying facility directly connected to the reducing furnace, and
   the gas generated in the reducing furnace by a reduction treatment in the reducing step is introduced from the reducing furnace directly to the drying facility.

5. A melt-reducing furnace for melt-reducing a mixture of a nickel oxide ore and a carbonaceous reducing agent to produce a ferronickel metal, the furnace comprising:

   a drying treatment unit configured to dry the mixture; and
   a reduction treatment unit having a burner configured to reduce the nickel oxide ore by heating the mixture after being dried in the drying treatment unit by the burner to obtain a ferronickel metal and slag in a molten state,
   wherein in a relation in a height direction, the drying treatment unit and the reduction treatment unit are positioned at an upper side and a lower side, respectively, and are provided in the same space, and
   the drying treatment unit is configured to dry the mixture at a temperature of 150 °C or more and 400 °C or less by a gas generated in the reduction treatment unit positioned at the lower side, and
   the reduction treatment unit is configured to heat the mixture such that the temperature of a ferronickel metal to be obtained is in a range of 1400 °C or more and 1600 °C or less and the temperature of slag is in a range of 1480 °C or more and 1680 °C or less.

**Patentansprüche**

1. Oxiderz-Trockenschmelzverfahren zum Herstellen eines Ferronickelmetalls, das ein Reduktionsprodukt ist, durch Reduzieren einer Mischung aus einem Nickeloxiderz und einem kohlenstoffhaltigen Reduktionsmittel, wobei das Oxiderz-Schmelzverfahren umfasst:

   einen Trocknungsschritt zum Trocknen der Mischung, und
   einen Reduktionsschritt zum Reduzieren des Nickeloxiderzes durch Zuführen der Mischung in einen Reduktionsofen und Erhitzen der Mischung durch einen Brenner, um ein Ferronickelmetall und Schlacke in einem geschmolzenen Zustand zu erhalten,
   wobei in dem Trocknungsschritt die Mischung bei einer Temperatur von 150 °C oder mehr und 400 °C oder weniger unter Verwendung von in dem Reduktionsofen erzeugtem Gas getrocknet wird, wobei die getrocknete Mischung anschließend einer Behandlung in dem Reduktionsschritt unterzogen wird, und
   wobei in dem Reduktionsschritt die Mischung, die das Nickeloxiderz umfasst, so erhitzt wird, dass die Temperatur eines zu erhaltenden Ferronickelmetalls in einem Bereich von 1400 °C oder mehr und 1600 °C oder weniger liegt und die Temperatur der Schlacke in einem Bereich von 1480 °C oder mehr und 1680 °C oder weniger liegt, wodurch die Mischung reduziert wird.

2. Oxiderz-Schmelzverfahren gemäß Anspruch 1, wobei in dem Reduktionsschritt das Metall und die Schlacke in geschmolzenem Zustand, die durch die Reduktion des Nickeloxiderzes entstanden sind, durch die spezifische Schwerkraft getrennt werden.

3. Oxiderz-Schmelzverfahren gemäß Anspruch 1 oder Anspruch 2, wobei in dem Reduktionsschritt die Mischung durch Steuerung eines Luft-Brennstoff-Verhältnisses des Brenners in einem Bereich von 0,8 oder mehr und 1,1 oder weniger erhitzt wird.

4. Oxiderz-Schmelzverfahren gemäß einem der Ansprüche 1 bis 3, wobei in dem Trocknungsschritt die Mischung in einer direkt mit dem Reduktionsofen verbundenen Trocknungseinrichtung getrocknet wird, und
   das im Reduktionsofen durch eine Reduktionsbehandlung im Reduktionsschritt erzeugte Gas vom Reduktionsofen direkt in die Trocknungsanlage eingeleitet wird.

5. Schmelzreduktionsofen zum Schmelzreduzieren einer Mischung aus einem Nickeloxiderz und einem kohlenstoffhaltigen Reduktionsmittel, um ein Ferronickelmetall herzustellen, wobei der Ofen umfasst:

   eine Trocknungsbehandlungseinheit, die zum Trocknen der Mischung eingerichtet ist; und
   eine Reduktionsbehandlungseinheit mit einem Brenner, der so eingerichtet ist, dass er das Nickeloxiderz durch Erhitzen der Mischung, nachdem diese in der Trocknungsbehandlungseinheit durch den Brenner getrocknet wurde, reduziert, um ein Ferronickelmetall und Schlacke in einem geschmolzenen Zustand zu erhalten,
   wobei in Bezug auf eine Höhenrichtung die Trocknungsbehandlungseinheit und die Reduktionsbehandlungseinheit an einer oberen Seite beziehungsweise einer unteren Seite positioniert sind und in demselben Raum bereitgestellt sind, und
   die Trocknungsbehandlungseinheit so eingerichtet ist, dass sie die Mischung bei einer Temperatur von 150 °C oder mehr und 400 °C oder weniger durch ein Gas trocknet, das in der an der unteren Seite angeordneten Reduktionsbehandlungseinheit erzeugt wird, und
   die Reduktionsbehandlungseinheit so eingerichtet ist, dass sie die Mischung so erhitzt, dass die Temperatur eines zu erhaltenden Ferronickelmetalls in einem Bereich von 1400 °C oder mehr und 1600 °C oder weniger liegt und die Temperatur der Schlacke in einem Bereich von 1480 °C oder mehr und 1680 °C oder weniger liegt.

**Revendications**

1. Procédé de fusion à sec de minerai d'oxyde pour produire un ferronickel métallique, qui est un produit de réduction, par réduction d'un mélange d'un minerai d'oxyde de nickel et d'un agent réducteur carboné, le procédé de fusion de minerai d'oxyde comprenant :

   une étape de séchage pour sécher le mélange, et
   une étape de réduction pour réduire le minerai d'oxyde de nickel en chargeant le mélange dans un four de réduction et en chauffant le mélange par un brûleur pour obtenir un ferronickel métallique et des scories à l'état fondu,

dans lequel, dans l'étape de séchage, le mélange est séché à une température de 150°C ou plus et de 400°C ou moins, en utilisant un gaz généré dans le four de réduction, le mélange séché étant ensuite soumis à un traitement dans l'étape de réduction, et

dans lequel dans l'étape de réduction, le mélange comprenant le minerai d'oxyde de nickel est chauffé de telle sorte que la température d'un ferronickel métallique à obtenir se situe dans une plage de 1 400°C ou plus et 1 600°C ou moins et que la température des scories est dans une plage de 1 480°C ou plus et 1 680°C ou moins, grâce à quoi le mélange est réduit.

2. Procédé de fusion de minerai d'oxyde selon la revendication 1, dans lequel dans l'étape de réduction, le métal et les scories dans un l'état fondu généré par la réduction du minerai d'oxyde de nickel est séparé par densité.

3. Procédé de fusion de minerai d'oxyde selon la revendication 1 ou la revendication 2, dans lequel dans l'étape de réduction, le mélange est chauffé en contrôlant un rapport air-carburant du brûleur dans une plage de 0,8 ou plus et 1,1 ou moins.

4. Procédé de fusion de minerai d'oxyde selon l'un quelconque des revendications 1 à 3, dans lequel dans l'étape de séchage, le mélange est séché dans une installation de séchage directement reliée au four de réduction, et le gaz généré dans le four de réduction par un traitement de réduction dans l'étape de réduction est introduit directement du four de réduction vers l'installation de séchage.

5. Four de réduction de fusion pour réduire la fusion d'un mélange d'un minerai d'oxyde de nickel et d'un agent réducteur carboné pour produire un ferronickel métallique, le four comprenant :

une unité de traitement de séchage configurée pour sécher le mélange ; et

une unité de traitement de réduction comportant un brûleur configuré pour réduire le minerai d'oxyde de nickel en chauffant le mélange après avoir été séché dans l'unité de traitement de séchage par le brûleur pour obtenir un ferronickel métallique et des scories à l'état fondu,

dans lequel, dans une relation dans le sens de la hauteur, l'unité de traitement de séchage et l'unité de traitement de réduction sont positionnées respectivement sur un côté supérieur et un côté inférieur et sont disposées dans le même espace, et

l'unité de traitement de séchage est configurée pour sécher le mélange à une température de 150°C ou plus et 400°C ou moins par un gaz généré dans l'unité de traitement par réduction positionnée sur le côté inférieur, et l'unité de traitement par réduction est configurée pour chauffer le mélange de telle sorte que la température d'un métal ferronickel à obtenir se situe dans une plage de 1 400°C ou plus et 1 600°C ou moins et la température des scories est dans une plage de 1 480°C ou plus et 1 680°C ou moins.

# FIG. 1

NICKEL OXIDE ORE

CARBONACEOUS
REDUCING AGENT

| MIXING STEP | S1 |

MIXTURE

| DRYING STEP | S2 |

MIXTURE

| REDUCING STEP | S3 |

| RECOVERING STEP | S4 |

METAL        SLAG

# FIG. 2

# FIG. 3

NICKEL OXIDE ORE    CARBONACEOUS REDUCING AGENT

MIXING STEP ~ S11

MIXTURE

DRYING AND REDUCING STEP ~ S12

RECOVERING STEP ~ S13

METAL    SLAG

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011256414 A
- EP 0222452 A
- JP 4149531 B
- WO 2015015468 A
- JP 2017036472 A
- FR 2619825
- WO 9720954 A
- US 3953196 A
- JP 2010270954 A